(19) Europäisches Patentamt
European Patent Office
Office européen des brevets

(11) **EP 2 501 599 B1**

(12) **EUROPÄISCHE PATENTSCHRIFT**

(45) Veröffentlichungstag und Bekanntmachung des Hinweises auf die Patenterteilung:
**24.05.2017   Patentblatt 2017/21**

(21) Anmeldenummer: **10784470.6**

(22) Anmeldetag: **16.11.2010**

(51) Int Cl.:
*B61F 9/00* (2006.01)    *G01M 17/10* (2006.01)
*B61L 15/00* (2006.01)    *B61F 5/24* (2006.01)
*B61F 5/30* (2006.01)

(86) Internationale Anmeldenummer:
**PCT/EP2010/067562**

(87) Internationale Veröffentlichungsnummer:
**WO 2011/061182 (26.05.2011 Gazette 2011/21)**

(54) **VERFAHREN ZUR ZUSTANDSÜBERWACHUNG WENIGSTENS EINEN RADSATZ AUFWEISENDEN DREHGESTELLS EINES SCHIENENFAHRZEUGS**

METHOD FOR MONITORING THE STATE OF A BOGIE OF A RAILWAY VEHICLE COMPRISING AT LEAST ONE WHEEL SET

PROCÉDÉ DE SURVEILLANCE DE L'ÉTAT D'AU MOINS UN BOGIE DE VÉHICULE FERROVIAIRE PRÉSENTANT UN JEU DE ROUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2009   DE 102009053801**

(43) Veröffentlichungstag der Anmeldung:
**26.09.2012   Patentblatt 2012/39**

(73) Patentinhaber: **KNORR-BREMSE Systeme für Nutzfahrzeuge GmbH**
**80809 München (DE)**

(72) Erfinder:
• **FRIESEN, Ulf**
**85579 Neubiberg (DE)**
• **BURKHART, Thomas**
**80469 München (DE)**

(74) Vertreter: **Mattusch, Gundula**
**C/o Knorr-Bremse AG**
**Moosacherstrasse 80**
**80809 München (DE)**

(56) Entgegenhaltungen:
DE-A1- 10 020 521    DE-B3-102006 001 540
US-A- 543 111    US-A1- 2002 056 398
US-B1- 7 213 789

EP 2 501 599 B1

**Beschreibung**

Die Erfindung geht aus von einem Verfahren zur Zustandsüberwachung eines wenigstens einen Radsatz sowie wenigstens einen Schlingerdämpfer aufweisenden Drehgestells eines Schienenfahrzeugs, wobei die Räder des Radsatzes durch eine Achse starr verbunden sind und ein annährend konisches Radprofil aufweisen, gemäß dem Oberbegriff von Anspruch 3. Anspruch 6 betrifft ein Computerprogrammprodukt zur Ausführung des Verfahrens.

Im Schienenfahrzeugverkehr werden heutzutage vermehrt Diagnose- und Überwachungssysteme eingesetzt, mit denen Zustandsänderungen von Bauteilen und Baugruppen des Schienenfahrzeugs erfasst werden, um Defekte dieser Bauteile und Baugruppen zu erkennen. Insbesondere bei Drehgestellen von Schienenfahrzeugen ist eine Detektion von unzulässigen Verschleißzuständen im Hinblick auf die Betriebssicherheit von hohem Interesse.

DE 10 2006 001 540 B3 stellt ein Verfahren zur Zustandsüberwachung von Drehgestellen eines Schienenfahrzeugs vor, bei dem die Räder der Radsätze der Drehgestelle durch Achsen starr verbunden sind und ein konisches Radprofil aufweisen. Dabei wird der Sinuslauf wenigstens eines Radsatzes überwacht, welcher auf dem konischen Radprofil der Räder basiert, und bei einem Ausbleiben des Sinuslaufs ein Signal für das Vorliegen einer Entgleisung des Radsatzes erzeugt.

Dieses Verfahren erlaubt jedoch lediglich eine Detektion einer Entgleisung von Radsätzen je nachdem ob ein Sinuslauf vorhanden ist oder nicht im Sinne eines binären Zustands, weil ein vorhandener Sinuslauf ein charakteristisches periodisches Signal erzeugt, welches nach einer Entgleisung völlig ausbleibt. Damit ist mit dem bekannten Verfahren jedoch keine Frühwarnung möglich, welche auf der Beobachtung einer langsamen oder schleichenden Veränderung von Drehgestellparametern oder des Verschleißzustands basiert.

Gemäß der gattungsbildenden DE 100 20 521 A1 wird das Schwingungsverhalten wenigstens einer Fahrzeugkomponente eines Schienenfahrzeugs überwacht. Das dort beschriebene Verfahren geht davon aus, dass einzelne Fahrzeugkomponenten auf Schwingungsanregungen im Betrieb mit Eigenschwingungen definierter Frequenz, Amplitude und Dämpfung reagieren. Durch Vergleich der ermittelten Ist-Eigenschwingung mit der erwarteten und als Referenzwert abgespeicherten Eigenschwingung wird auf ein verändertes Schwingungsverhalten der überwachten Fahrzeugkomponente geschlossen, so dass dieses veränderte Schwingungsverhalten in Bezug zu etwaigen Fehlerquellen gesetzt wird, um eine Onboard-Diagnose von Schienenfahrzeugen zu realisieren. Dabei wird stets ein Frequenz-, Amplituden- und/oder Dämpfungsparameter einer Eigenschwingung der betreffenden Fahrzeugkomponente überwacht.

Mit anderen Worten wird gemäß der bekannten Schrift die Fahrzeugkomponente einer Art Modalanalyse unterzogen und modale Parameter wie Eigenfrequenz und Dämpfung zum Erkennen von Schäden im Rahmen einer Onboard-Diagnose überwacht. Das bekannte Verfahren wertet jedoch Zeitverläufe der Messsignale undifferenziert aus. Insbesondere werden bei dem Verfahren unter völlig unterschiedlichen Randbedingungen wie beispielsweise unterschiedlichen Haftreibungs- bzw. Gleitreibungsverhältnissen gewonnene Signale gemeinsam ausgewertet. Demzufolge unterliegen die Kennwerte aus der Fourier-Transformation wie beispielsweise die Werte für die Eigenfrequenzen sowie deren Amplitudenmaxima einer relativ großen Streuung, welche eine eindeutige und zuverlässige Auswertung der Frequenzgänge erschwert.

Ein Nachteil des bekannten Verfahrens besteht auch darin, dass das Anregungsspektrum eines Schienenfahrzeugs im Betrieb so unterschiedlich ist, dass zu jedem einzelnen Zeitpunkt nicht klar ist, welchen Anteil Eigenschwingungen der betreffenden Fahrzeugkomponente am gemessenen Signal überhaupt haben. Dem liegt die Überlegung zugrunde, dass nicht jede Fremdanregung einer Fahrzeugkomponente zwangsläufig zu einer Eigenschwingung der Fahrzeugkomponente bzw. zu einer Schwingung in der betreffenden Eigenfrequenz führt.

Nicht zuletzt ist es aus Kostengründen denkbar, dass nicht jeder Fahrzeugkomponente einer aus mehreren Fahrzeugkomponenten zusammengesetzten Baugruppe wie beispielsweise einem Drehgestell mit Radsätzen und Schlingerdämpfer ein eigener Sensor zugeordnet wird. Falls daher eine solche Baugruppe mit lediglich einem Sensor ausgestattet wird und die bekannte Onboard-Überwachung zu dem Ergebnis kommt, dass die Baugruppe abweichende Eigenschwingungskennwerte aufweist, bleibt offen, welche Fahrzeugkomponente (Räder der Radsätze, Schlingerdämpfer) der Baugruppe einen Fehler aufweist.

Der vorliegenden Erfindung liegt die Aufgabe zugrunde, ein Verfahren der oben erwähnten Art derart weiter zu entwickeln, dass identifiziert werden kann, welche Komponente des Drehgestells einen Fehler aufweist.

Diese Aufgabe wird erfindungsgemäß durch die Merkmale von Anspruch 1 gelöst.

Technischer Hintergrund der Erfindung

Die Laufstabilität eines Fahrwerkes eines Schienenfahrzeugs wird von dessen Dämpfungseigenschaften stark beeinflusst, weshalb im Allgemeinen aber vor allem für Hochgeschwindigkeitszüge Schlingerdämpfer zwischen Drehgestell und Wagenkasten notwendig sind. Die Gesamtdämpfung eines Drehgestells wird durch mehrere Parameter bestimmt:

- Die Dämpfung bedingt durch die Eigenschaften der Räder, insbesondere die Konizität und das Profil der Räder, welches sich verschleißbedingt verändert,

- die Drehdämpfung zwischen Drehgestell und Wagenkasten, welche die Dämpfung durch den oder die Schlingerdämpfer beinhaltet,

- die Geschwindigkeit des Schienenfahrzeugs.

Schlingerdämpfer dämpfen bekanntermaßen die Drehschwingungen von Drehgestellen bei Schwingungen um die Hochachse. Sowohl die Änderungen der Dämpfungseigenschaften als auch die Änderung der Konizität der Räder haben folglich direkte Auswirkungen auf die Laufstabilität der Räder, insbesondere auf die Ausprägung des sog. Schlingerns der Drehgestelle.

Das Schlingern des Drehgestells wird durch Fremdanregung vom Gleis ausgelöst. Zu diesen Fremdanregungen zählen:

- Gleislagefehler,

- Weichenüberfahrten,

- Kurvenfahrten,

- Sinuslauf der Radsätze.

Der Sinuslauf der Radsätze gibt außerdem darüber Aufschluss, ob eine Verringerung der Laufstabilität aufgrund einer zunehmenden äquivalenten Konizität bzw. einer Profiländerung der Räder der Radsätze eines Drehgestells oder aufgrund einer verringerten Drehdämpfung des Drehgestells vorliegt.

Der Sinuslauf ist eine Beschreibung des Laufverhaltens von Schienenfahrzeugradsätzen mit konischem Radprofil (Konizität). Durch den Sinuslauf wird in der Geraden und auf Kurven mit großen Radien eine Selbstzentrierung des Radsatzes auf dem Fahrweg erzeugt, ohne dass es zum Anlaufen des Spurkranzes kommen muss. Dadurch werden ein besseres Laufverhalten und ein geringerer Verschleiß erreicht als bei Radsätzen mit zylindrischem Radprofil, die keinen Sinuslauf aufweisen.

Zum Sinuslauf kommt es dadurch, dass bei einem Radsatz mit konischem Radprofil, der außermittig steht, die Radradien an den beiden Berührungspunkten am Gleis unterschiedlich sind. Da die beiden Räder des Radsatzes über die Achse starr verbunden sind, bewegt sich das Rad mit dem größeren Radius am Berührpunkt schneller nach vorne, als das Rad mit dem kleineren Radius. Daher lenkt ein zu weit rechts stehender Radsatz nach links, weil der Radradius am rechten Berührpunkt größer ist als am linken Berührpunkt. Entsprechend lenkt ein zu weit links stehender Radsatz nach rechts. Hierdurch kommt es zu einer Längsbewegung des Radsatzes in Form einer Sinuskurve.

Modellhaft kann der Sinuslauf durch die Klingel'sche Formel beschrieben werden, welche die Lauffrequenz f dieser wellenförmigen Bewegung eines Schienenfahrzeugs beschreibt:

$$f = \frac{v}{2\pi} * \sqrt{\frac{\tan\gamma}{r_0 \cdot s}} \qquad\qquad (1)$$

Dabei bedeuten:

$\tan\gamma$   äquivalente Konizität des betreffenden Rades

Die äquivalente Konizität gibt die genäherte Kegelneigung für ein nicht rein kegeliges Radprofil an, bei der ein rein kegeliges Radprofil mit dieser Kegelneigung ein sehr ähnliches kinematisches Laufverhalten aufweisen würde.

$r_1, r_2$   Rollradien [m]

$r_0$   mittlerer Rollradius [m], mit $r_0 = \dfrac{r_1 + r_2}{2}$

$s$   Spurmittenmaß [bei Normalspur 1500 mm]

f  Sinuslauffrequenz [Hz]

v  Geschwindigkeit [m/s]

Gleichung (1) kann entnommen werden, dass mit steigender äquivalenter Konizität tan $\gamma$ die Sinuslauffrequenz f zunimmt, dass also das Fahrzeug mit einer hohen Erregerfrequenz f aus dem Sinuslauf des Radsatzes beansprucht wird. Die kritische Geschwindigkeit, bei welcher das Fahrzeug noch stabil läuft, sinkt dadurch. Für hohe Fahrgeschwindigkeiten, wie sie beispielsweise bei Hochgeschwindigkeitszügen auftritt, muss sich daher die Berührgeometrie zwischen Rad und Schiene in einem derartigen Zustand befinden, dass eine geringe äquivalente Konizität vorliegt. Mit anderen Worten soll für einen stabilen Geradeauslauf des Schienenfahrzeugs die Frequenz f des Sinuslaufs der Radsätze möglichst klein sein, was eine möglichst geringe äquivalente Konizität tan $\gamma$ erfordert.

Hintergrund der Überlegungen ist daher, dass der durch das Zusammenwirken von Rädern mit annährend konischem Radprofil mit den Schienen beruhende Sinuslauf bei einem Vorliegen bestimmter Randbedingungen einen bestimmten Amplitudenverlauf und eine bestimmte Frequenz aufweisen.

Wenn beispielsweise durch eine Fourier-Transformation aus einem gemessen Zeitsignals eines Querbeschleunigungsverlaufs ermittelte Frequenz um mehr als einen vorgegebenen Wert von einem für diese Randbedingungen erwarteten Frequenzwert abweicht, dann stellt dies ein Indiz für ein Vorliegen eines unzulässigen Verschleißzustands in Form einer unzulässig hohen äquivalenten Konizität tan $\gamma$ dar.

Die Konizität tan $\gamma$ hat wiederum Einfluss auf die Dämpfungseigenschaften des Fahrwerks. Das Maß der Konizität ermöglicht eine Differenzierung ob bei geändertem Dämpfungskennwert der Verschleiß eines Schlingerdämpfers vorliegt oder der verringerte Dämpfungskennwert vom Radsatz herrührt.

Der Amplitudenverlauf einer nach einer Anregung abklingenden Schwingung gibt Rückschlüsse auf die Dämpfungseigenschaften des Drehgestells, insbesondere der Schlingerdämpfer. Durch Vergleich eines gemessen Querbeschleunigungsverlaufes mit einem erwarteten Verlauf bzw. daraus gebildete Kennwerte, ist eine Aussage über den Verschleißzustandes von Fahrwerkskomponenten, wie z.B. Dreh- und Schlingerdämpfer möglich.

Wenn daher eine Änderung der Dämpfung und auch eine Änderung der Konizität tan $\gamma$ der Räder detektiert wird, können Aussagen darüber getroffen werden, ob ein Schienenfahrzeug in Zukunft im Betrieb in einen nicht tolerierbaren instabilen Zustand kommen wird oder nicht.

Bisher wird beim Stand der Technik der Maximalwert der Querbeschleunigung eines Drehgestells eines Schienenfahrzeugs überwacht und bei Überschreiten eines vorgegebenen Grenzwerts ein Warnsignal erzeugt. Eine Verbesserung dieser ereignisgesteuerten Methode besteht jedoch in einer Zustandsüberwachung, bei der die Dämpfung oder Dämpfungskennwerte des Drehgestells bezüglich Querbewegungen ermittelt werden, um insbesondere frühzeitig Signale hinsichtlich einer notwendigen Wartung bzw. Reparatur des betroffenen Drehgestells zu erzeugen.

Eine Seitenanregung, beispielsweise bei einer Weichenüberfahrt, führt in der Regel zu gedämpften Schwingungen, aus welchen der Dämpfungskennwert des Gesamtsystems Drehgestell bestimmbar ist.

Bei höheren Geschwindigkeiten tritt die Anregung durch den Sinuslauf in den Vordergrund, der Dämpfungskennwert kann dann nur unter Berücksichtigung der Konizität der Räder bestimmt werden. Die Konizität der Räder ist nicht konstant sondern verändert sich durch Verschleiß, tendenziell vergrößert sie sich durch größer werdenden Verschleiß.

Anhand der gemessenen Frequenz des Sinuslaufs kann auf die Konizität der Räder rückgeschlossen werden und zwar unabhängig von den Amplituden der Schwingungen und der Dämpfung des Gesamtsystems Drehgestell. Dadurch wird es unter Berücksichtigung der Fahrzeuggeschwindigkeit beispielsweise möglich, den Dämpfungskennwert der Schlingerdämpfer zu bestimmen.

Bei geringer Geschwindigkeit des Schienenfahrzeugs ist eine Bestimmung von Dämpfungskennwerten ohne Berücksichtigung der Sinuslaufanregung möglich, weil der Einfluss des Sinuslaufs auf die Dämpfung dann gering ist.

Die oben allgemein beschriebenen Zusammenhänge lassen sich dann physikalisch wie folgt darstellen: Im Folgenden wird unter dem Gesamtsystem Drehgestell das Drehgestell samt zugeordneter Radsätze und Schlingerdämpfer verstanden. Das Laufverhalten und die Stabilität eines Fahrwerks (Drehgestell) eines Schienenfahrzeugs hängen von der Gesamtdämpfung $D_g$ ab. Die Gesamtdämpfung $D_g$ eines Drehgestells setzt sich näherungsweise aus der Dämpfung der Schlingerdämpfer $D_{schl}$ und der Dämpfung der Radsätze $D_{rad}$ aufgrund ihrer Konizität tan $\gamma$ zusammen:

$$D_g = D_{schl} + D_{rad} \qquad (2)$$

Die Dämpfung der Radsätze $D_{rad}$ ist weiterhin eine Funktion der Geschwindigkeit v und der Frequenz f des Sinuslaufs:

$$D_{rad} = f\,(v,f) \qquad\qquad (3)$$

Bei niedriger Geschwindigkeit wird die Dämpfung der Radsätze $D_{rad}$ sehr klein und kann vernachlässigt werden. Somit ist bei niedriger Geschwindigkeit die Gesamtdämpfung $D_g$ eines Drehgestells annähernd gleich der Dämpfung des Schlingerdämpfers $D_{schl}$.

$$D_g = D_{schl} \qquad\qquad (4)$$

Falls daher bei niedrigen Geschwindigkeiten eine Veränderung, insbesondere eine Reduzierung der Gesamtdämpfung $D_g$ festgestellt wird, so ist diese Veränderung auf eine Reduzierung der Dämpfung $D_{schl}$ der oder des Schlingerdämpfers des Drehgestells zurückzuführen. Bei höheren Geschwindigkeiten wirkt sich die Konizität $\tan \gamma$ der Räder stärker aus. Aus der Gesamtdämpfung

$$D_g = D_{schl} + D_{rad} \qquad\qquad (5)$$

kann nicht mehr unmittelbar auf die aus den Schlingerdämpfern und der Radsatzkonizität herrührenden Dämpfungsanteile rückgeschlossen werden.

Die Konizität $\tan \gamma$ der Räder ist jedoch eine Funktion der Sinuslauffrequenz f, welche bei einer bestimmten Fahrzeuggeschwindigkeit v auftritt:

$$\tan \gamma = f\,(v,f) \qquad\qquad (6)$$

Dann ist die Dämpfung der Radsätze $D_{rad}$ eine Funktion der Konizität $\tan \gamma$ der Räder bzw. eine Funktion der Sinuslauffrequenz f bei der Fahrzeuggeschwindigkeit v:

$$D_{rad} = f(\tan \gamma) = f(v,f) \qquad\qquad (7)$$

Falls daher bei höheren Fahrzeuggeschwindigkeiten v die gemessene Sinuslauffrequenz f einem Erwartungswert entspricht, was auf einen zulässigen Verschleiß der Räder im Hinblick auf ihre Konizität $\tan \gamma$ hinweist, dann deutet eine Änderung der Gesamtdämpfung $D_g$ auf eine Änderung der Dämpfung der oder des Schlingerdämpfers $D_{schl}$ des betreffenden Drehgestells hin.

Wenn dann ausreichend Messdaten beispielsweise in Form von Kennfeldern vorhanden sind, um die Dämpfung der Radsätze $D_{rad}$ (v,f) in Abhängigkeit der Parameter Geschwindigkeit v und Sinuslauffrequenz f darzustellen, ist eine Bestimmung des Dämpfungskoeffizienten des Schlingerdämpfers $D_{schl}$ und des Dämpfungskoeffizienten der Radsätze $D_{rad}$ auch bei höheren Geschwindigkeiten v möglich.

Offenbarung der Erfindung

Vor dem Hintergrund der oben dargestellten Zusammenhänge wird gemäß der Erfindung ein Verfahren zur Zustandsüberwachung eines wenigstens einen Radsatz sowie wenigstens einen Schlingerdämpfer aufweisenden Drehgestells eines Schienenfahrzeugs vorgestellt, wobei

- die Räder des Radsatzes durch eine Achse starr verbunden sind und ein annähernd konisches Radprofil aufweisen,
- aus den von wenigstens einem am Drehgestell angeordneten Sensor gelieferten Signalen ein Dämpfungskennwert ermittelt wird,
- der ermittelte Dämpfungskennwert mit einem gespeicherten typischen Wert oder Wertebereich für den Dämpfungskennwert verglichen wird, wobei
- bei einer um ein vorbestimmtes Maß überschreitenden Abweichung des ermittelten Dämpfungskennwerts von dem gespeicherten Wert oder Wertebereich für den Dämpfungskennwert überprüft wird, wie hoch die Geschwindigkeit des Schienenfahrzeugs relativ zu einer vorgegebenen Grenzgeschwindigkeit ist, und
- bei die vorgegebene Grenzgeschwindigkeit unterschreitenden Geschwindigkeiten des Schienenfahrzeugs ein Signal für eine Veränderung im Bereich des Schlingerdämpfers des Drehgestells erzeugt wird, oder

- bei die Grenzgeschwindigkeit erreichenden oder überschreitenden Geschwindigkeiten des Schienenfahrzeugs aus den von am Drehgestell angeordneten Sensormitteln gelieferten Signalen die Signale herausgefiltert werden, welche einem auf dem konischen Radprofil der Räder basierenden Sinuslauf des Radsatzes des Drehgestells entsprechen und anhand eines gespeicherten, die Abhängigkeit des Dämpfungskennwerts des Radsatzes von der Geschwindigkeit des Schienenfahrzeugs und der Frequenz des Sinuslaufs beschreibendes Kennfelds ein Dämpfungskennwert des Radsatzes des Drehgestells abhängig von der ermittelten Sinuslauffrequenz und der vorliegenden Geschwindigkeit ermittelt wird, und

- der ermittelte Dämpfungskennwert des Radsatzes des Drehgestells mit einem gespeicherten, für die gerade vorliegende Geschwindigkeit des Schienenfahrzeugs und die gerade vorliegende Frequenz des Sinuslaufs typischen Wert oder Wertebereich für den Dämpfungskennwert des Radsatzes des Drehgestells verglichen wird und

- bei einer um ein vorbestimmtes Maß überschreitenden Abweichung des ermittelten Dämpfungskennwerts des Radsatzes des Drehgestells von dem gespeicherten Wert oder Wertebereich für den Dämpfungskennwert des Radsatzes des Drehgestells ein Signal für das Vorliegen einer Veränderung Im Bereich des Radsatzes des Drehgestells erzeugt wird, oder - bei einer das vorbestimmte Maß erreichenden oder unterschreitenden Abweichung des ermittelten Dämpfungskennwerts des Radsatzes des Drehgestells von dem gespeicherten Wert oder Wertebereich für den Dämpfungskennwert des Radsatzes des Drehgestells ein Signal für das Vorliegen einer Veränderung im Bereich des Schlingerdämpfers des Drehgestells erzeugt wird.

Vorzugsweise sind die von dem Sensor gelieferten Signale Querbeschleunigungssignale, aus welchen durch einen Filter der Frequenzbereich von 3Hz bis 9 Hz herausgefiltert wird. Dieser Frequenzbereich ist typischerweise der Frequenzbereich, in welchem der Sinuslauf auftritt.

Mit dem oben beschriebenen Verfahren ist folglich die jeweils mit dem unzulässigen Verschleiß- oder Fehlerzustand behaftete Fahrwerkskomponente (Räder oder Schlingerdämpfer) eindeutig identifizierbar.

Auf das Signal hin können entweder automatisch oder durch den Triebwagenführer Gegenmaßnahmen eingeleitet werden, welche in einer baldigen Durchführung einer Wartung des betroffenen Radsatzes oder Schlingerdämpfers des Drehgestells oder im Extremfall in einem sofortigen Abbremsen des Schienenfahrzeugs oder Schienenfahrzeugverbandes bestehen können. Denkbar ist auch eine Datenfernübertragung des Signals zu einer Wartungsstation.

Das erfindungsgemäße Verfahren ist kostengünstig durch Sensormittel zur Überwachung der Bewegungen eines Drehgestells sowie durch eine Auswerteeinrichtung zur Auswertung der Sensorsignale dieser Sensormittel realisierbar.

Durch die in den Unteransprüchen aufgeführten Maßnahmen sind vorteilhafte Weiterbildungen und Verbesserungen der in den unabhängigen Ansprüchen angegebenen Erfindung möglich.

Das Signal kann dem Triebwagenführer des Schienenfahrzeugverbands optisch und/oder akustisch dargestellt werden, beispielsweise in Form einer blinkenden Warnlampe oder durch einen Warnton, damit dieser Gegenmaßnahmen einleitet. Insbesondere stellt das Signal ein Wartungssignal zu einer anstehenden Wartung des betroffenen Radsatzes oder Drehgestells dar, bei welcher dieser Radsatz so bearbeitet werden muss, dass die äquivalente Konizität wieder zulässige bzw. unkritische Werte einnimmt und eine Überprüfung bzw. ein Austausch der Schlingerdämpfer erfolgt.

Nachstehend sind Ausführungsbeispiele der Erfindung in der Zeichnung dargestellt und in der nachfolgenden Beschreibung näher erläutert. In der Zeichnung zeigt

Fig.1 eine perspektivische Darstellung eines Schienenfahrzeugs mit zwei jeweils zwei Radsätze und zwei Schlingerdämpfer aufweisenden Drehgestellen;

Fig.2 ein Diagramm, welches ein Signal für die Querschwingungen eines Drehgestells über der Zeit t darstellt;

Fig.3 eine schematische Darstellung einer Einrichtung zur Überwachung des Zustands des Drehgestells gemäß einer bevorzugten Ausführungsform der Erfindung.

Fig.4 ein Diagramm, welches ein Beschleunigungssignal über die Zeit darstellt, zur Bestimmung eines Dämpfungskennwerts;

Fig.5 ein Flussdiagramm einer bevorzugten Ausführungsform des Verfahrens gemäß der Erfindung.

Beschreibung der Ausführungsbeispiele

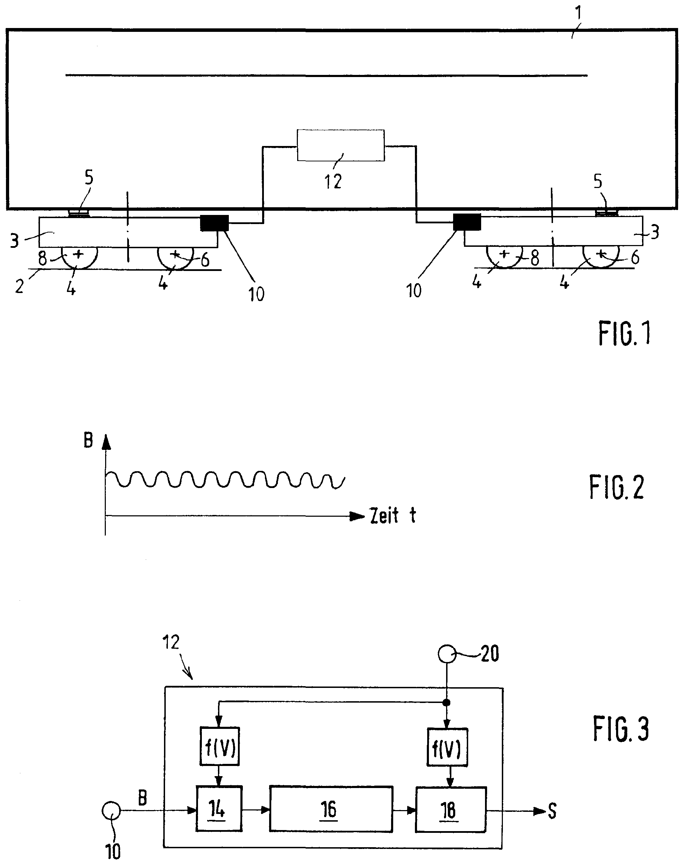

In der Fig.1 ist ein Schienenfahrzeug eines Schienenfahrzeugverbandes gezeigt, welches beispielsweise zwei Drehgestelle 3 mit je zwei Radsätzen 4 und zwei Schlingerdämpfern 5 aufweist. Dabei rollen die Radsätze 4 auf parallelen Schienen 2, bestehend aus einer Achse 6 und zwei an ihr starr befestigten Rädern 8. Die Räder 8 der Radsätze 4 weisen jeweils ein annähernd konisches Radprofil auf, d.h. der Raddurchmesser an der Lauffläche verringert sich in bekannter Weise in einer vom Spurkranz weg weisenden Richtung. Dadurch ergibt sich während des Abrollens des Radsatzes 4 auf den Schienen 2 der eingangs erläuterte Sinuslauf, d.h. periodische Schwingungen relativ zu den Schienen 2 und zum Wagenkasten 1 des Schienenfahrzeugs.

An beiden Drehgestellen 3 sei jeweils ein Sensor 10 zur Aufnahme von in quer zur Fahrtrichtung auftretenden Schwingungen der Drehgestelle 3 befestigt. Bevorzugt werden Beschleunigungssensoren 10 verwendet, welche die Querbeschleunigung der Drehgestelle 3 aufnehmen. Denkbar sind aber auch Weg- bzw. Geschwindigkeitsaufnehmer. Von den Sensoren 10 werden die Querbeschleunigungssignale in eine in Fig.3 schematisch gezeigte, mikroprozessorbasierte Auswerteeinrichtung 12 eingesteuert. Aus den von den Sensoren 10 gelieferten Signalen wird beispielsweise durch einen Filter der Frequenzbereich von 3 Hz bis 9 Hz herausgefiltert. Dieser Frequenzbereich ist typischerweise der Frequenzbereich, in welchem der Sinuslauf auftritt.

Die entsprechenden, den Sinuslauf des Schienenfahrzeugs charakterisierenden Signale B der Sensoren 10 sind in Fig.2 über der Zeit t dargestellt. Wie anhand von Fig.2 zu sehen ist, sind den Sinuslauf der Drehgestelle 3 repräsentierenden Signale periodisch sinusförmig und im Wesentlichen ungedämpft, weil die Radsätze 4 einer ständigen Fremdanregung durch den Sinuslauf unterworfen sind. Daher sind die Schwingungsamplituden bei konstanter Geschwindigkeit v annährend gleich groß.

Die Frequenz f des Sinuslaufs hängt von Randbedingungen wie unter anderem von der momentanen Fahrgeschwindigkeit v des Schienenfahrzeugs bzw. von der Drehgeschwindigkeit der Räder 8 ab. Besonders bevorzugt umfassen die Randbedingungen, welche auf die Frequenz f des Sinuslaufs beeinflussen neben der Fahrzeuggeschwindigkeit v wenigstens einen der folgenden Parameter: Die Beladung des Schienenfahrzeugs, die gerade wirkenden Brems- oder Antriebskräfte, eine Kurven- oder Geradeausfahrt, der Streckenzustand der gerade befahrenen Strecke und Ähnliches. Dabei existiert für jede Randbedingung, insbesondere für jede Geschwindigkeit v abhängig von Faktoren wie der Geometrie des Rad-Schiene-Kontakts (äquivalente Konizität) eine charakteristische Frequenz f bzw. ein charakteristischer Frequenzbereich für die Frequenz f des Sinuslaufs, welcher beispielsweise durch Versuche vorab ermittelbar und als Referenzwerte in Kennfeldern der Auswerteeinrichtung speicherbar ist.

Die Auswerteeinrichtung 12 gemäß Fig.3 weist vorzugsweise einen Filter 14, eine Signalaufbereitungseinheit 16 sowie einen Vergleicher 18 auf. Über einen Geschwindigkeitssensor 20 erhält die Auswerteeinrichtung 12 außerdem ein Signal für die momentane Fahrzeuggeschwindigkeit v. Die von der gemessenen Fahrzeuggeschwindigkeit v abhängige Frequenz f (v) der momentanen Schwingungen des Drehgestells 3 in Form des Sinuslaufs wird vorzugsweise durch eine Fast-Fourier-Transformation (FFT) der Zeitsignale des Beschleunigungssensors 10 (Fig.2) innerhalb der Signalaufbereitungseinheit 16 ermittelt.

Im Vergleicher 18 der Auswerteeinrichtung 12 sind weiterhin vorzugsweise die Kennfelder abgespeichert, welche die Abhängigkeit der Frequenz f des Sinuslaufs von den Rand- oder Betriebsbedingungen des Schienenfahrzeugs wie beispielsweise der momentanen Fahrgeschwindigkeit v des Schienenfahrzeugs bzw. von der Drehgeschwindigkeit der Räder 8 darstellen. Diese Kennfelder mit den charakteristischen Frequenzen f für den Sinuslauf werden beispielsweise durch Versuche vorab ermittelt.

Die auf den gemessenen Zeitsignalen B beruhende, von der Signalaufbereitungseinheit 16 gelieferte Frequenz f (v) der periodischen Schwingungen in Bezug zur jeweils vorliegenden Fahrzeuggeschwindigkeit v oder Raddrehgeschwindigkeit wird sodann mit einem gespeicherten, für die vorliegenden Randbedingungen wie der gerade vorliegenden Fahrzeuggeschwindigkeit v typischen Wert oder Wertebereich für die Frequenz f (v) des Sinuslaufs verglichen und die Abweichung der gemessenen Frequenz f (v) von dem gespeicherten Wert f (v) oder von dem gespeicherten Wertebereich überwacht.

Bei Abweichung der gemessenen Frequenz f (v) von dem gespeicherten Wert f(v) oder von dem gespeicherten Wertebereich um ein vorbestimmtes Maß wird bevorzugt ein Signal S für ein Vorliegen eines unzulässigen Verschleißzustand der Radsätze 4 erzeugt. Genauer ist bei einem solchen Signal S davon auszugehen, dass die Konizität der Radsätze 4 des betroffenen Drehgestells im Hinblick auf die Laufstabilität des Drehgestells 3 kritische Werte einnimmt. Da beispielsweise an jedem Drehgestell 3 ein Sensor 10 vorhanden ist, kann das Signal dem jeweiligen Drehgestell 3 bzw. dessen Radsätzen 4 zugeordnet werden.

Dieses Signal S kann dem Triebwagenführer des Schienenfahrzeugverbands bzw. einem Wartungspersonal optisch und/oder akustisch dargestellt werden, beispielsweise in Form von Warnlampen oder durch Warntöne, damit Gegenmaßnahmen eingeleitet werden können. Insbesondere stellt das Signal S ein Wartungssignal zu einer anstehenden Wartung der Radsätze 4 des betroffenen Drehgestells 3 dar und kann auch in einem auslesbaren Speicher der Auswerteeinrichtung für das Wartungspersonal abgelegt werden. Die Gegenmaßnahmen können darin bestehen, dass die Radsätze 4 des betroffenen Drehgestells 3 so nachgearbeitet werden, dass die Rad-Schiene-Geometrie, insbesondere die äquivalente Konizität zulässige bzw. unkritische Werte aufweist und dadurch Dämpfungseigenschaften der Radsätze 4 im Rahmen des Sinuslaufs hergestellt werden, welche eine kritische Ausprägung des Sinuslaufs insbesondere bei hohen Geschwindigkeiten v verhindern.

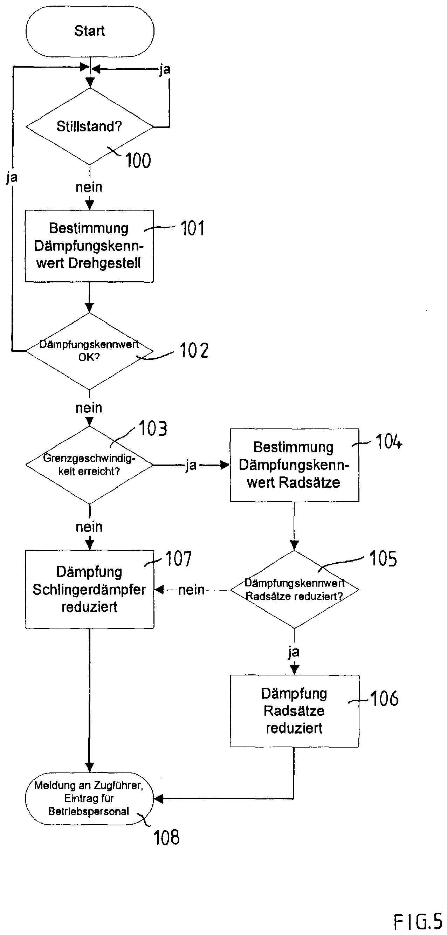

In Fig.5 ist ein Ablaufplan eines weiteren Ausführungsbeispiels eines Verfahrens dargestellt. Dieses Verfahren wird ebenfalls durch eine wie in Fig.3 gezeigte Auswerteeinrichtung 12 ausgeführt.

Nach dem Programmstart wird anhand einer Abfrage im Schritt 100 überprüft, ob das sich das Schienenfahrzeug im Stillstand befindet oder nicht. Falls Stillstand vorliegt kehrt das Programm zum Start zurück. Falls sich hingegen das Schienenfahrzeug in Fahrt befindet, wird aus den von einem an einem Drehgestell 3 angeordneten Sensor 10 gelieferten Signalen im Rahmen des Schritts 101 der Gesamt-Dämpfungskennwert oder der Gesamt-Dämpfungskoeffizient $D_g$ des Drehgestells 3 ermittelt.

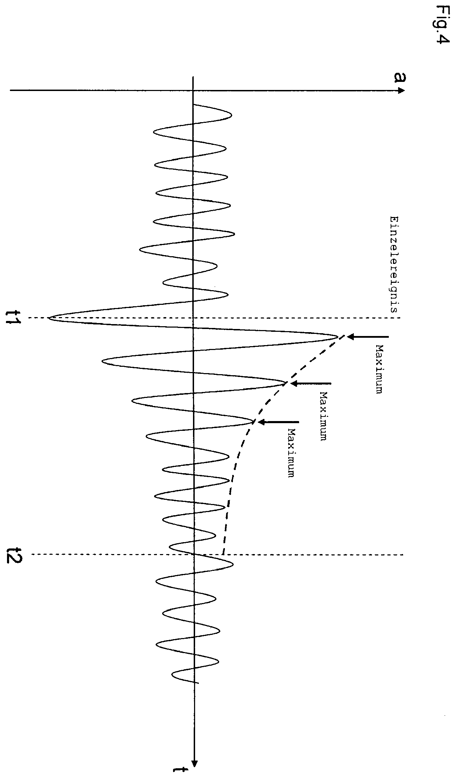

Dabei werden bevorzugt vom Sensor 10 gelieferte Zeitsignale a gemäß Fig.4 herangezogen. Unter der Annahme, dass das Drehgestell 3 zum Zeitpunkt $t_1$ durch ein Einzelereignis, d.h. durch eine einmalige Stoßanregung wie beispielsweise eine Weichenüberfahrung zu Querschwingungen angeregt wird, ergibt sich der in Fig.4 gezeigte typische gedämpfte und daher abklingende Schwingungsverlauf, wobei zur Gesamtdämpfung $D_g$ des Drehgestells 3 dieser Querschwingung zum einen der aus der Rad/Schiene-Geometrie, insbesondere der Konizität der Räder 8 herrührende Dämpfungskoeffizient $D_{rad}$ der Radsätze 4 sowie der Dämpfungskoeffizient $D_{schl}$ des Schlingerdämpfers 5 beitragen.

Der Verlauf der Schwingungsamplituden vom Zeitpunkt $t_1$ der Anregung bis zu einem Zeitpunkt $t_2$, in dem die Schwingungsamplituden wieder annähernd konstant sind, ist abklingend, d.h. der Wert der Maxima der Schwingungsamplituden nimmt mit der Zeit ab. Dieses Verhalten kann welcher durch eine Einhüllende oder Tangente an die Schwingungsmaxima der Schwingungsamplituden im Zeitbereich zwischen $t_1$ und $t_2$ charakterisiert werden. Anhand der Steigung dieser Tangente kann dann Gesamt-Dämpfungskoeffizient $D_g$ des Drehgestells 3 ermittelt werden.

Im Rahmen des Schritts 102 wird der ermittelte Gesamt-Dämpfungskoeffizient Dg des Drehgestells 3 mit einem gespeicherten typischen Wert oder Wertebereich für den Gesamt-Dämpfungskoeffizient $D_g$ des Drehgestells 3 verglichen.

Überschreitet dabei eine Abweichung des ermittelten Gesamt-Dämpfungskoeffizient $D_g$ des Drehgestells 3 von dem gespeicherten Wert oder Wertebereich für den Gesamt-Dämpfungskoeffizient $D_g$ des Drehgestells 3 ein vorbestimmtes Maß nicht (Dämpfungskennwert OK), so ist von einer ausreichenden Dämpfung des Drehgestells 3 auszugehen und das Programm kehrt wieder zum Start zurück.

Wenn hingegen eine das vorbestimmte Maß überschreitende Abweichung des ermittelten Gesamt-Dämpfungskoeffizient $D_g$ des Drehgestells 3 von dem gespeicherten Wert oder Wertebereich für den Gesamt-Dämpfungskoeffizient $D_g$ des Drehgestells 3 vorliegt (Dämpfungskennwert nicht OK), so wird im Rahmen des Schritts 103 überprüft, wie hoch die Geschwindigkeit des Schienenfahrzeugs relativ zu einer vorgegebenen Grenzgeschwindigkeit ist. Der Begriff "Grenzgeschwindigkeit" bedeutet hier die Geschwindigkeit, ab der ein nicht zu vernachlässigender Einfluss der Radsätze 4 eines Drehgestells 3 auf die Gesamt-Dämpfung $D_g$ vorhanden ist. Diese Grenzgeschwindigkeit wird bevorzugt durch Versuche vorab ermittelt.

Wie eingangs erläutert, kann bei niedrigen Geschwindigkeiten der Einfluss des Rad/Schiene-Kontakts auf das Dämpfungsverhalten vernachlässigt werden und die Dämpfungseigenschaften des Drehgestells 3 werden maßgeblich von dem Schlingerdämpfer 5 des Drehgestells 3 bestimmt. Bei die vorgegebene Grenzgeschwindigkeit unterschreitenden Geschwindigkeiten des Schienenfahrzeugs und bei im Rahmen des vorangehenden Schritts 102 festgestellter unzureichender Gesamt-Dämpfung $D_g$ wird von der Auswerteeinrichtung 12 folglich ein Signal S für eine Veränderung des Dämpfungskoeffizienten $D_{schl}$ des Schlingerdämpfers 5 des Drehgestells 3 erzeugt. Die Bezeichnung und Ausprägung dieses Signals ist dabei variabel. Entscheidend ist nur, dass es auf eine Veränderung im Bereich des Schlingerdämpfers 5 des betreffenden Drehgestells 3 hinweist.

Bei die Grenzgeschwindigkeit erreichenden oder überschreitenden Geschwindigkeiten des Schienenfahrzeugs ist jedoch neben dem Dämpfungskoeffizienten $D_{schl}$ des Schlingerdämpfers 5 auch der Dämpfungskoeffizient $D_{rad}$ der Radsätze 4 maßgebend.

Bei höheren Geschwindigkeiten werden aus den von dem am Drehgestell 3 angeordneten Sensor 10 gelieferten Signale die Signale durch den Filter 14 der Auswerteeinrichtung 12 herausgefiltert, welche einem auf dem konischen Radprofil der Räder 8 basierenden Sinuslauf der Radsätze 4 des Drehgestells 3 entsprechen.

Diese Signale werden gefiltert und durch eine Fourier-Transformation in den Frequenzbereich transformiert. Ergebnis ist dann die gerade vorliegende Sinuslauffrequenz f des Schienenfahrzeugs oder des betreffenden Drehgestells 3 bei der gerade vorliegenden Geschwindigkeit v. In einem Speicher des Vergleichers 18 der Auswerteeinrichtung 12 sind die Abhängigkeit des Dämpfungskoeffizienten $D_{rad}$ der Radsätze 4 von der Geschwindigkeit v des Schienenfahrzeugs und der Frequenz f des Sinuslaufs beschreibende Kennfelder abgelegt. Dann kann anhand dieser Kennfelder der maßgebende Dämpfungskennwert $D_{rad}$ der Radsätze 4 des Drehgestells 3 abhängig von der zuvor ermittelten vorliegenden Sinuslauffrequenz f und der vorliegenden Geschwindigkeit v im Schritt 104 ermittelt werden.

Dann wird der ermittelte Dämpfungskennwert $D_{rad}$ der Radsätze 4 des Drehgestells 3 im Rahmen von Schritt 105 mit einem gespeicherten, für die gerade vorliegende Geschwindigkeit v des Schienenfahrzeugs und die gerade vorliegende Frequenz f des Sinuslaufs typischen Wert oder Wertebereich für den Dämpfungskennwert $D_{rad}$ der Radsätze 4 des Drehgestells 3 verglichen.

Falls dieser Vergleich 105 ergibt, dass der im Rahmen von Schritt 104 ermittelte Dämpfungskoeffizient $D_{rad}$ der Radsätze 4 des Drehgestells 3 mehr als ein vorbestimmtes Maß von dem gespeicherten Wert oder Wertebereich für den Dämpfungskoeffizienten $D_{rad}$ der Radsätze 4 des Drehgestells 3 abweicht, so wird ein Signal 106 für das Vorliegen einer Veränderung im Bereich der Radsätze 4 des betreffenden Drehgestells 3 erzeugt. Dieses Signal soll dann auf eine relevante Verringerung des Dämpfungskoeffizienten $D_{rad}$ der Radsätze 4 des Drehgestells 3 hinweisen.

Falls jedoch der Vergleich 105 ergibt, dass der im Rahmen von Schritt 104 ermittelte Dämpfungskoeffizient

$D_{rad}$ der Radsätze 4 des Drehgestells 3 weniger als das vorbestimmte Maß von dem gespeicherten Wert oder Wertebereich für den Dämpfungskoeffizienten $D_{rad}$ der Radsätze 4 des Drehgestells 3 abweicht, so wird ein Signal 107 für das Vorliegen einer Veränderung im Bereich des Schlingerdämpfers 5 des Drehgestells 3 erzeugt. Dieses Signal soll dann auf eine relevante Verringerung des Dämpfungskoeffizienten $D_{schl}$ des Schlingerdämpfers 5 des Drehgestells 3 hinweisen.

Die Signale 106 oder 107 können dem Triebwagenführer des Schienenfahrzeugverbands im Schritt 108 optisch und/oder akustisch dargestellt werden, beispielsweise in Form einer blinkenden Warnlampe oder durch einen Warnton, damit dieser Gegenmaßnahmen einleitet. Insbesondere stellen die Signale 106 oder 107 Wartungssignale zu einer anstehenden, auch außerplanmäßigen Wartung der Radsätze 4 oder des Schlingerdämpfers des betroffenen Drehgestells 3 dar. Alternativ kann auch die Geschwindigkeit des Schienenfahrzeugs oder des Schienenfahrzeugsverbands automatisch herabgesetzt werden.

Bezugszeichenliste

| | |
|---|---|
| 1 | Wagenkasten |
| 2 | Schienen |
| 3 | Drehgestelle |
| 4 | Radsätze |
| 5 | Schlingerdämpfer |
| 6 | Achse |
| 8 | Räder |
| 10 | Beschleunigungssensor |
| 12 | Auswerteeinrichtung |
| 14 | Filter |
| 16 | Signalaufbereitungseinheit |
| 18 | Vergleicher |
| 20 | Geschwindigkeitssensor |

**Patentansprüche**

**1.** Verfahren zur Zustandsüberwachung eines wenigstens einen Radsatz (4) sowie wenigstens einen Schlingerdämpfer (5) aufweisenden Drehgestells (3) eines Schienenfahrzeugs, wobei

a) Räder (8) des Radsatzes (4) durch eine Achse (6) starr verbunden sind und ein annährend konisches Radprofil aufweisen,

b) aus den von am Drehgestell angeordneten Sensormitteln (10) gelieferten Signalen ein Dämpfungskennwert ermittelt wird,

c) der ermittelte Dämpfungskennwert mit einem gespeicherten typischen Wert oder Wertebereich für den Dämpfungskennwert verglichen wird, **dadurch gekennzeichnet, dass**

d) bei einer um ein vorbestimmtes Maß überschreitenden Abweichung des ermittelten Dämpfungskennwerts von dem gespeicherten Wert oder Wertebereich für den Dämpfungskennwert überprüft wird, wie hoch die Geschwindigkeit des Schienenfahrzeugs relativ zu einer vorgegebenen Grenzgeschwindigkeit ist, und

e) bei die vorgegebene Grenzgeschwindigkeit unterschreitenden Geschwindigkeiten des Schienenfahrzeugs ein Signal (S) für das Vorliegen einer Veränderung im Bereich des Schlingerdämpfers (5) des Drehgestells (3) erzeugt wird, oder

f) bei die Grenzgeschwindigkeit erreichenden oder überschreitenden Geschwindigkeiten des Schienenfahrzeugs aus den von den am Drehgestell (3) angeordneten Sensormitteln (10) gelieferten Signalen die Signale herausgefiltert werden, welche einem auf dem konischen Radprofil der Räder (8) basierenden Sinuslauf des Radsatzes (4) des Drehgestells entsprechen und anhand wenigstens eines gespeicherten, die Abhängigkeit des Dämpfungskennwerts des Radsatzes von der Geschwindigkeit (v) des Schienenfahrzeugs und der Frequenz (f) des Sinuslaufs beschreibendes Kennfelds ein Dämpfungskennwert des Radsatzes (4) des Drehgestells abhängig von der ermittelten Frequenz (f) des Sinuslaufs und der vorliegenden Geschwindigkeit (v) ermittelt wird, und

g) der ermittelte Dämpfungskennwert des Radsatzes (4) des Drehgestells mit einem gespeicherten, für die gerade vorliegende Geschwindigkeit (v) des Schienenfahrzeugs und die gerade vorliegende Frequenz (f) des Sinuslaufs typischen Wert oder Wertebereich für den Dämpfungskennwert des Radsatzes (4) des Drehgestells (3) verglichen wird und

h1) bei einer um ein vorbestimmtes Maß überschreitenden Abweichung des ermittelten Dämpfungskennwerts des Radsatzes (4) des Drehgestells (3) von dem gespeicherten Wert oder Wertebereich für den Dämpfungskennwert des Radsatzes (4) des Drehgestells (3) ein Signal (S) für das Vorliegen einer Veränderung im Bereich des Radsatzes (4) des Drehgestells (3) erzeugt wird, oder

h2) bei einer das vorbestimmte Maß erreichenden oder unterschreitenden Abweichung des ermittelten Dämpfungskennwerts des Radsatzes (4) des Drehgestells (3) von dem gespeicherten Wert oder Wertebereich für den Dämpfungskennwert des Radsatzes (4) des Drehgestells (3) ein Signal (S) für das Vorliegen einer Veränderung im Bereich des Schlingerdämpfers (5) des Drehgestells (3) erzeugt wird.

2. Verfahren nach einem der vorhergehenden Ansprüche, **dadurch gekennzeichnet, dass** das Signal (S) optisch und/oder akustisch dargestellt wird.

3. Verfahren nach einem der vorhergehenden Ansprüche, **dadurch gekennzeichnet, dass** das Signal (S) ein Wartungssignal zu einer anstehenden Wartung der betroffenen Komponente des Drehgestells darstellt.

4. Verfahren nach einem der vorhergehenden Ansprüche, **dadurch gekennzeichnet, dass** auf das Signal (S) hin die Geschwindigkeit des Schienenfahrzeugs reduziert wird.

5. Verfahren nach einem der vorhergehenden Ansprüche, **dadurch gekennzeichnet, dass** die von dem Sensor (10) gelieferten Signale Querbeschleunigungssignale sind, aus welchen durch einen Filter (14) der für den Sinuslauf maßgebende Frequenzbereich von 3Hz bis 9Hz gefiltert wird.

6. Computerprogrammprodukt, mit Programmteilen zur Ausführung des Verfahrens nach einem der Ansprüche 1 bis 5.

7. Computerprogrammprodukt nach Anspruch 6, gespeichert auf einem computerlesbaren Aufzeichnungsmedium oder in einer computerlesbaren Aufzeichnungsvorrichtung

**Claims**

1. Method for monitoring the state of a rail vehicle bogie (3) comprising at least one wheel set (4) and at least one anti-rolling device (5), wherein

a) wheels (8) of the bogie (4) are rigidly joined by an axle (6) and have an approximately conical wheel profile,
b) a damping characteristic is determined from the signals supplied by sensor means (10) mounted on the bogie,
c) the determined damping characteristic is compared to a stored typical value or value range for the damping characteristic, **characterised in that**
d) if the determined damping characteristic exceeds the stored typical value or value range for the damping characteristic by a predetermined measure, it is checked how high the speed of the rail vehicle is relative to a predetermined limit speed, and
e) if the speeds of the rail vehicle undershoot the predetermined limit speed, a signal (S) is generated for the presence of a change in the region of the anti-rolling device (3) of the bogie, or
f) if the speeds of the rail vehicle reach or exceed the limit speed, the signals which correspond to a sine run of the wheel set (4) of the bogie based on the conical wheel profile of the wheels (8) are filtered out from the signals supplied by the sensor means (10) amounted on the bogie (3) and a damping characteristic of the wheels set (4) of the bogie is determined as a function of the detected frequency (f) of the sine run and the current speed (v), using at least one stored characteristic map describing the dependence of the damping characteristic of the wheel set on the speed (v) of the rail vehicle and the frequency (f) of the sine run, and
g) the determined damping characteristic of the wheel set (4) of the bogie is compared to a stored value or value range for the damping characteristic of the wheel set (4) of the bogie (3) which is typical for the current speed (v) of the rail vehicle and the current frequency (f) of the sine run, and
h1) if the determined damping characteristic of the wheel set (4) of the bogie (3) deviates from the stored value or value range for the damping characteristic of the wheel set (4) of the bogie (3) by a predetermined measure, a signal (S) is generated for the presence of a change in the region of the wheel set (4) of the bogie (3), or
h2) if a deviation of the determined damping characteristic of the wheel set (4) of the bogie (3) from the stored value or value range for the damping characteristic of the wheel set (4) of the bogie (3) reaches or undershoots the predetermined measure, a signal (S) is generated for the presence or a change in the region of the anti-rolling device (3) of the bogie (3).

2. Method according to any of the preceding claims, **characterised in that** the signal (S) is presented optically and/or acoustically.

3. Method according to any of the preceding claims, **characterised in that** the signal (S) represents a maintenance signal for a pending maintenance of the respective component of the bogie.

4. Method according to any of the preceding claims, **characterised in that** in response to the signal (S), the speed of the rail vehicle is reduced.

5. Method according to any of the preceding claims, **characterised in that** the signals supplied by the sensor (10) are transverse acceleration signals from which the frequency range of 3 Hz to 9 Hz, which is relevant to the sine run, is filtered out by a filter (14).

6. Computer programme product with programme parts for executing the method according to any of claims 1 to 5.

7. Computer programme product according to claim 6, stored on a computer-readable recording medium or in a computer-readable recording device.

**Revendications**

1. Procédé de contrôle de l'état d'au moins un bogie (3) d'un véhicule ferroviaire ayant au moins un jeu (4) de roues, ainsi qu'au moins un amortisseur (5) de roulis, dans lequel

   a) des roues (8) du jeu (4) de roues sont reliées rigidement par un essieu (6) et ont un profil de roue à peu près conique,
   b) on détermine une valeur caractéristique d'amortissement à partir des signaux fournis par des moyens (10) de capteur montés sur le bogie,
   c) on compare la valeur caractéristique d'amortissement qui a été déterminée à une valeur typique mémorisée ou à une plage de valeurs mémorisée de la valeur caractéristique d'amortissement, **caractérisé en ce que**
   d) pour un écart, dépassant d'un montant défini à l'avance, de la valeur caractéristique d'amortissement, qui a été déterminée, à la valeur ou à la plage de valeurs mémorisée de la valeur caractéristique d'amortissement, on contrôle que la vitesse du véhicule ferroviaire est grande par rapport à une vitesse limite donnée à l'avance et
   e) aux vitesses inférieures à la vitesse limite donnée à l'avance du véhicule ferroviaire, on produit un signal (S) de présence d'une modification dans la partie de l'amortisseur (5) de roulis du bogie (3) ou
   f) pour des vitesses atteignant ou dépassant la vitesse limite du véhicule ferroviaire, on filtre, à partir des signaux fournis par les moyens (10) de capteur montés sur le bogie (3), les signaux, qui correspondant à la course sinusoïdale, reposant sur le profil de roues coniques des roues (8), du jeu (4) de roues du bogie et, à l'aide d'au moins une courbe caractéristique mémorisée décrivant la variation de la valeur caractéristique d'amortissement du jeu de roues en fonction de la vitesse (v) du véhicule ferroviaire et de la fréquence (f) de la course sinusoïdale, on détermine une valeur caractéristique d'amortissement du jeu (4) de roues du bogie en fonction de la fréquence (f) déterminée de la course sinusoïdale et de la vitesse (v) en cours et
   g) on compare la valeur caractéristique d'amortissement, qui a été déterminée, du jeu (4) de roues du bogie à une valeur ou une plage de valeurs typique mémorisée, pour la vitesse (v) précisément en cours du véhicule ferroviaire et la fréquence (f) précisément en cours de la course sinusoïdale, de la valeur caractéristique d'amortissement du jeu (4) de roues du boggie (3) et
   h1) pour un écart, dépassant d'un montant défini à l'avance, de la valeur caractéristique d'amortissement, qui a été déterminée, du jeu (4) de roues du bogie (3), à la valeur ou la plage de valeurs mémorisée de la valeur caractéristique d'amortissement du jeu (4) de roues du bogie (3), on produit un signal (S) de présence d'une modification dans la partie du jeu (4) de roues du bogie (3) ou
   h2) pour un écart atteignant ou inférieur au montant défini à l'avance de la valeur caractéristique d'amortissement, qui a été déterminée, du jeu (4) de roues du bogie (3), à la valeur ou à la plage de valeurs mémorisée de la valeur caractéristique d'amortissement du jeu (4) de roues du bogie (3), on produit un signal (S) de présence d'une modification dans la partie de l'amortisseur (5) de roulis du bogie (3).

**2.** Procédé suivant l'une des revendications précédentes, **caractérisé en ce qu'**on représente le signal (S) optiquement et/ou acoustiquement.

**3.** Procédé suivant l'une des revendications précédentes, **caractérisé en ce que** le signal (S) représente un signal d'entretien pour un entretien imminent de l'élément concerné du bogie.

**4.** Procédé suivant l'une des revendications précédentes, **caractérisé en ce que**, à partir du signal (S), on réduit la vitesse du véhicule ferroviaire.

**5.** Procédé suivant l'une des revendications précédentes, **caractérisé en ce que** les signaux fournis par le capteur (10) sont des signaux d'accélération transversale, qui sont filtrés par un filtre (14) de la plage de fréquences de 3 Hz à 9 Hz déterminantes pour la course sinusoïdale.

**6.** Produit de programme d'ordinateur ayant des parties de programme pour l'exécution du procédé suivant l'une des revendications 1 à 5.

**7.** Produit de programme d'ordinateur suivant la revendication 6, mémorisé sur un support d'enregistrement déchiffrable par ordinateur ou dans un dispositif d'enregistrement déchiffrable par ordinateur.

FIG.1

FIG.2

FIG.3

Fig.4

Start

Stillstand? —ja
100

nein

Bestimmung
Dämpfungskennwert Drehgestell
101

Dämpfungskennwert
OK?
102

nein

Grenzgeschwindigkeit erreicht?
103

ja

Bestimmung
Dämpfungskennwert Radsätze
104

Dämpfungskennwert
Radsätze reduziert?
105

Dämpfung
Schlingerdämpfer
reduziert
107

nein

ja

Dämpfung
Radsätze
reduziert
106

Meldung an Zugführer,
Eintrag für
Betriebspersonal
108

FIG.5

**IN DER BESCHREIBUNG AUFGEFÜHRTE DOKUMENTE**

**In der Beschreibung aufgeführte Patentdokumente**

- DE 102006001540 B3
- DE 10020521 A1